# EUROPÄISCHE PATENTSCHRIFT

(11) **EP 1 886 984 B1**
(45) Veröffentlichungstag und Bekanntmachung des Hinweises auf die Patenterteilung: **25.04.2012**
(21) Anmeldenummer: 07113947.1
(22) Anmeldetag: 07.08.2007
(51) Int. Cl.: C06C 5/04, C06C 5/08, B29C 39/10, B29C 33/12, B29C 39/28, B29C 70/76

(54) **Verfahren zum anformen eines dichtelements an ein strangförmiges zündmittel, dadurch erhältliches strangförmiges zündmittel und sprengsystem**
Method for moulding a sealing element to a string-shaped fuse, string-shaped fuse obtainable thereby and detonation system
Procédé de formage d'un élément d'étanchéité sur un produit d'allumage en forme de tronçon, produit d'allumage en forme de tronçon obtenu par ce procédé et système d'explosion

(30) Priorität: 10.08.2006 DE 102006037552
(43) Veröffentlichungstag der Anmeldung: 13.02.2008
(73) Patentinhaber: ATC Establishment, 9491 Ruggell (LI)
(72) Erfinder: Skufca, Peter Maks, 1230 Domzale (SI)
(74) Vertreter: Winter, Brandl, Fürniss, Hübner, Röss, Kaiser, Polte - Partnerschaft

(56) Entgegenhaltungen:
- WO-A-96/00879
- WO-A-98/43795
- WO-A-2005/039848
- CH-A- 396 535
- DE-A1- 4 138 258
- GB-A- 2 281 378
- US-A- 3 990 367
- US-A- 5 413 046
- US-A- 5 501 151

## Beschreibung

Die vorliegende Erfindung betrifft ein Verfahren zur Anformung eines mantelartigen Dichtelements an ein strangförmiges Zündmittel (Zündschnur, Zündschlauch) zum nichtelektrischen Zünden einer Sprengkapsel, ein dadurch erhältliches strangförmiges Zündmittel sowie ein Sprengsystem bestehend aus einem strangförmigen Zündmittel mit angeformtem Dichtelement und einer Sprengkapsel.

Zum Zünden von Sprengladungen wird in der Regel eine Sprengkapsel verwendet, auf die entweder elektrisch oder nichtelektrisch ein Zündimpuls übertragen wird. Bei der nichtelektrischen Zündung wird zur Übertragung des Zündimpulses in der Regel eine Zündschnur verwendet, deren eines Ende mit einem Anzünder zum Anzünden der Zündschnur verbunden wird und deren anderes Ende so in die Sprengkapsel eingeführt wird, dass der von der Zündschnur übertragene Zündimpuls die Sprengkapsel zünden kann.

Entscheidend ist, dass die Zündschnur nach dem Einführen derart fest mit der Sprengkapsel verbunden bleibt, dass ein unbeabsichtigtes Herausziehen der Zündschnur vermieden wird. Je nach Einsatzgebiet kann es auch bedeutend sein, dass nach dem Einführen der Zündschnur in die Sprengkapsel diese gegenüber einem Eindringen von Feuchtigkeit abgedichtet ist.

Zu diesem Zweck wird in der Regel ein Dichtmaterial zwischen dem Außenumfang der Zündschnur und dem Innenumfang der Sprengkapsel angeordnet, das die erforderliche Abdichtung gegenüber dem Eindringen von Feuchtigkeit erreicht und durch eine gewisse Klemmwirkung auch einen festen Sitz der Zündschnur in der Sprengkapsel gewährleistet.

Alternativ dazu oder auch als weitere Maßnahme zur Verbesserung der Dichtheit und des Sitzes kann das offene Ende der Sprengkapsel nach Einführen der Zündschnur verformt werden, z. B. durch Crimpen.

So wird in der DE 30 10 067 A1 zwischen Zündschnurmantel und Sprengkapselinnenwand ein Hohlkörper eingebracht und die Verbindung zwischen Zündschnur und Sprengkapsel durch Anwürgung abgedichtet. Um die Dichtheit weiter zu verbessern und das Einführen der Zündschnur zu erleichtern wird der Hohlkörper vor dem Einführen der Zündschnur zusätzlich mit einem Gleitmittel beschichtet.

In der DE 196 01 094 A1 wird eine wasserdichte Verbindung einer Anzündschnur mit einem Sprengkapselzünder erreicht, indem ein Innen mit einem thermoplastischen und hydrophoben Kleber beschichteter Schrumpfschlauch im Verbindungsabschnitt von Anzündschnur und Sprengkapselzünder aufgeschrumpft wird.

In der US 3,990,367 wird eine Spritzgussvorrichtung zum Anformen eines hülsenartigen Endanschlussstücks an eine Sprengschnur beschrieben, so dass unter Verwendung einer auf das Endanschlussstück aufgeschobenen Gewindemutter ein sicherer Anschluss der Sprengschnur an einen Booster ermöglicht wird.

Die bis jetzt bekannten Verfahren zur Verbindung einer Zündschnur mit einer Sprengkapsel erfordern somit neben der Zündschnur und der Sprengkapsel den Einsatz zusätzlicher Materialien wie Dichtmittel, Klebstoffe oder auch Gleitmittel um eine dichte und feste Verbindung der Zündschnur mit der Sprengkapsel zu erhalten. Somit sind zur Herstellung solcher Verbindungen auch mehrere Arbeitsschritte erforderlich, was insbesondere bei der Verwendung einer Vielzahl an Sprengkapsel für eine Sprengung den Zeitaufwand und damit die Kosten für die Vorbereitung der Sprengung beträchtlich erhöht.

Hiervon ausgehend liegt der Erfindung die Aufgabe zugrunde, eine Möglichkeit zur einfachen, schnellen und dennoch dichten und festen Verbindung einer Zündschnur mit einer Sprengkapsel zur Verfügung zu stellen.

Diese Aufgabe wird gelöst durch ein Verfahren zur Anformung eines mantelartigen Dichtelements an ein strangförmiges Zündmittel mit den Merkmalen des Anspruchs 1, ein dadurch erhältliches strangförmiges Zündmittel gemäß Anspruch 2 und ein Sprengsystem bestehend aus dem strangförmigen Zündmittel mit angeformten Dichtelement und einer zur Aufnahme des Zündmittels mit Dichtelement angepassten Sprengkapsel mit den Merkmalen des Anspruchs 11.

In den Anmeldeunterlagen der vorliegenden Patentanmeldung ist der Begriff "strangförmiges Zündmittel" so zu verstehen, dass jedes strangförmige Mittel umfasst ist, das eine nichtelektrische Übertragung eines Zündimpulses auf eine Sprengkapsel ermöglicht. Im Stand der Technik sind eine Reihe solcher Mittel bekannt und umfassen z. B. eine Zündschnur oder Anzündschnur oder auch einen Zündschlauch.

Das durch das erfindungsgemäße Verfahren erhältliche strangförmigeZündmittel zum nichtelektrischen Zünden einer Sprengkapsel umfasst eine Umhüllung und einen in die Umhüllung eingebrachten Explosivstoff. An einem Endabschnitt des strangförmigen Zündmittels ist ein die Umhüllung ummantelndes Dichtelement dauerhaft angeformt. Nach der Anformung bilden das strangförmigen Zündmittel und das Dichtelement eine einstückig handhabbare Einheit.

Dadurch wird eine feste und dauerhafte Verbindung zwischen dem strangförmigen Zündmittel und dem Dichtelement erreicht, die einerseits ein unbeabsichtigtes Herausziehen des Zündmittels aus dem Dichtelement verhindert und andererseits eine wirksame Abdichtung gegenüber dem Eindringen von Feuchtigkeit in die Sprengkapsel bereitstellt. Zur Verbindung des strangförmigen Zündmittels mit der Sprengkapsel sind somit keine weiteren Materialien notwendig, was die Vorbereitung einer Sprengung erleichtert und verkürzt.

Das Dichtelement kann ferner so ausgestaltet sein, dass es ein über seine Länge gleichbleibendes oder sich änderndes Querschnittsprofil aufweist. Damit kann die Gestalt des Dichtelements der Aufnahmeöffnung der Sprengkapsel angepasst werden, so dass ein inniger bzw. passgenauer Sitz des strangförmigen Zündmittels mit Dichtelement in der Aufnahmeöffnung der Sprengkapsel sichergestellt ist und somit eine zugfeste und dichte Verbindung zwischen Zündmittel und Sprengkapsel ermöglicht wird.

Ferner kann das Dichtelement so gestaltet sein, dass in einem vorgegebenen Abstand von dem in die Sprengkapsel einzuführenden Ende des Zündmittels ein Anschlag vorgesehen ist. Dieser Anschlag kann die Form eines Ringflanschs aufweisen, kann sich aber auch nur über einen Teil des Umfangs des Dichtelements erstrecken. Mit einem derartigen Anschlag wird vorbestimmt wie weit das strangförmige Zündmittel in die Sprengkapsel eingeführt werden kann, so dass die für eine zuverlässige Zündung der Sprengkapsel notwendige exakte Positionierung des Zündmittels in der Sprengkapsel sichergestellt ist. Wenn sich der Anschlag über den gesamten Umfang des Dichtelements erstreckt, wird darüber hinaus eine verbesserte Abdichtung gegenüber einem Eindringen von Feuchtigkeit erreicht.

Des weiteren kann das Dichtelement so gestaltet sein, dass dessen Längsschnitt ein Wellenprofil aufweist. Damit kann eine höhere Klemmwirkung des Dichtelements in der Sprengkapsel erzielt werden, was sowohl einen festen Sitz des Zündmittels in der Sprengkapsel als auch eine gute Abdichtung gegenüber einem Eindringen von Feuchtigkeit unterstützt.

Als Material zur Ausbildung des Dichtelements kann jedes Polymermaterial verwendet werden, das mit dem Material der Umhüllung kompatibel ist. Beispiele hierfür sind Styrol-Butadien-Gummi, Silikon-Gummi, Polyethylen, Polypropylen, Polyvinylchlorid, Ethylenvinylacetat, Polyamid oder Polyurethan.

Die Umhüllung des strangförmigen Zündmittels der vorliegenden Erfindung muss den jeweiligen Umgebungsbedingungen (Druck, Temperatur, elektromagnetische Felder, etc.) standhalten. Zur Verwendung im Untertagebau oder bei Erdöltiefbohrungen sollte die äußere Polymerschicht extremen Temperaturänderungen im Bereich von etwa -50 °C bis etwa 250 °C standhalten. Es wird daher vorzugsweise ein thermoplastisches oder elastomeres Material mit einer guten Beständigkeit gegen mechanische Beschädigungen, einer guten Korrosionsbeständigkeit und einer guten chemischen und Lösungsmittelbeständigkeit verwendet. Beispiele hierfür sind Styrol-Butadien-Gummi, Silikon-Gummi, Polyethylen, Polypropylen, Polyvinylchlorid, Ethylenvinylacetat, Polyamid oder Polyurethan.

Die Umhüllung des strangförmigen Zündmittels der vorliegenden Erfindung kann sowohl einen einlagigen als auch mehrlagigen Aufbau aufweisen. Ein mehrlagiger Aufbau der Umhüllung ist vor allem dann vorteilhaft, wenn spezielle Einsatzbedingungen es notwendig machen, dass z. B. die Außenschicht aus einem anderen Material besteht, wie die Innenschicht oder dass z. B. verstärkende Zwischenschichten zu verwenden sind.

Sind bei einer mehrlagigen Umhüllung sowohl die Außenschicht als auch die Innenschicht aus einem Polymermaterial hergestellt, so ist der Schmelzpunkt des Polymermaterials der Außenschicht vorteilhafterweise kleiner oder gleich dem Schmelzpunkt des Polymermaterials der Innenschicht. Beispielsweise beträgt die Schmelztemperatur der inneren Polymerschicht 250 °C und die Schmelztemperatur der äußeren Polymerschicht 230 °C.

Wird eine mehrlagige Umhüllung verwendet, so kann das Material der Innenschicht aus z. B. Surlyn^{®}, Polyethylen oder Polytetrafluorethylen ausgewählt sein. Diese Materialien sind insbesondere dann vorteilhaft, wenn das strangförmige Zündmittel ein Zündschlauch ist, da diese Materialien sich gut mit Explosivstoff beschichten lassen.

Die für die Umhüllung verwendeten Polymermaterialien können ferner Weichmacher, Flammverzögerungsmitteln, elektromagnetisch abschirmenden Mitteln oder dergleichen enthalten.

Der in die Umhüllung des strangförmigen Zündmittels der vorliegenden Erfindung eingebrachte Explosivstoff kann entweder als Beschichtung der Innenoberfläche eingebracht werden oder kann die Umhüllung vollständig ausfüllen, entweder in loser Form oder in gebundener Form.

Der Explosivstoff kann ein flüssiger, gelartiger oder fester, insbesondere pulverförmiger, explosionsfähiger Stoff sein. Bei dem Explosivstoff handelt es sich hier um einen explosionsfähigen Stoff, der einen Zündimpuls zur Sprengkapsel übertragen kann, so dass diese gezündet wird. Als Beispiele für den Explosivstoff seien hier Oktogen (Cyclotetramethylentetranitramin) oder Hexogen (Cyclotrimethylentrinitramin) genannt.

Wenn auf unerlaubte Weise ein Sprengsatz hergestellt bzw. verwendet wird, ist es zur Aufklärung des Sachverhalts hilfreich, die Herkunft der verwendeten Materialien zu kennen. Um dies zu erleichtern, kann das Dichtelement des strangförmigen Zündmittels mit einer Markierung versehen werden, die dessen Identifizierung sowohl vor als auch noch nach der Zündung des Sprengsatzes ermöglicht. Zu diesem Zweck können beispielsweise dem Material zur Ausbildung des Dichtelements geeignete Markierungssubstanzen zugesetzt werden.

So besteht die Möglichkeit durch Zusatz von einem oder mehreren in der Natur selten vorkommenden Elementen, wie beispielsweise den Seltenerdelementen, eine Elementverteilung zu erzeugen, die in der Natur in dieser Weise nicht vorkommt und spezifisch einem Hersteller oder auch Käufer des strangförmige Zündmittels zugeordnet werden kann. Entweder durch Beprobung des Dichtelements bei einem noch nicht gezündeten Sprengsatz oder durch eine Probenahme in der Umgebung einer Sprengung, wo das zersprengte Dichtelement verteilt vorliegt, und der qualitativen und quantitativen Analyse der Proben auf seltene Elemente, kann somit anhand des Vorkommens bestimmter Elemente, Elementkombinationen und/oder deren Mengenverhältnisse ein eindeutiger Rückschluss auf die Herkunft des zur Sprengung verwendeten Materials gemacht werden.

Als Vertreter der Seltenerdelemente können zu diesem Zweck beispielsweise Scandium, Yttrium, Lanthan, Cer, Praseodym oder Neodym verwendet werden. Durch Zumischen zu dem Material zur Ausbildung des Dichtelements von einem dieser Elemente in einer speziellen Menge oder von mehreren dieser Elemente in speziellen Mengenverhältnissen kann eine Art Fingerabdruck erzeugt werden, wodurch der Hersteller, der Käufer oder eine bestimmte Charge des strangförmigen Zündmittels identifiziert werden kann. Wenn darüber hinaus auch die rohrartige Umhüllung durch eine spezielle Elementverteilung markiert wird, so vervielfältigen sich die Markierungsmöglichkeiten für das strangförmigen Zündmittel der Erfindung.

Zur quantitativen und qualitativen Bestimmung derartiger seltener Elemente können beispielsweise die Röntgenfluoreszenzanalyse (RFA), die Optische Emissionsspektroskopie unter Verwendung eines induktiv gekoppelten Plasmas (ICP-OES) oder die Neutronenaktivierungsanalyse (NAA) verwendet werden.

In dem Verfahren der vorliegenden Erfindung wird eine Formvorrichtung zur Anformung eines mantelartigen Dichtelements an ein strangförmiges Zündmittel verwendet, wobei die Formvorrichtung einen hohlzylindrischen Gießraum umfasst, der sich zwischen zwei Stirnwänden (einer vorderen und einer hinteren Stirnwand) erstreckt, außenumfangsseitig von einer im Wesentlichen zylindrischen Außenumfangswand und innenumfangsseitig von einem koaxial angeordneten zylindrischen Stift begrenzt ist. Die Form des Gießraumes bestimmt letztlich die Form (Profil, Kontur, Querschnitt) des Dichtelements.

In der vorderen Stirnwand des Gießraumes ist eine Einführöffnung zum Einführen des strangförmigen Zündmittels ausgebildet. Der Querschnitt dieser Öffnung ist durch das Querschnittsprofil des strangförmigen Zündmittels vorgegeben, so dass ein passgenaues Einführen des Zündmittels ermöglicht wird. Vorzugsweise ist diese Öffnung auch konisch ausgebildet, wobei der Querschnitt sich von Außen in Richtung des Giesraumes bis auf den durch das Querschnittsprofil des strangförmigen Zündmittels vorgegeben Querschnitt verjüngt. Dadurch wird das Einführen des strangförmigen Zündmittels erleichtert.

Der Gießraum weist ferner an einer anderen Stelle als die Einführöffnung eine Einfüllöffnung zum Einfüllen des Formmaterials auf. Die Einfüllöffnung ist an einer geeigneten Stelle des Gießraumes, z.B. der Umfangswand oder der hinteren Stirnwand, ausgebildet.

Die Querschnittsform des Gießraumes ist ringförmig. Der Innenumfang des Querschnitts wird durch den Stift definiert, der sich von der hinteren Stirnwand des Gießraumes bis zumindest die Einführöffnung in der vorderen Stirnwand erstreckt. Der Stift kann auch durch die Einführöffnung in der vorderen Stirnwand aus der Formvorrichtung herausragen, z. B. um 1 bis 3 mm. Beim Einführen des strangförmigen Zündmittels wird dieses auf den Stift aufgesteckt. Dadurch wird einerseits eine genaue und zentrierte Positionierung des Zündmittels im Gießraum sichergestellt und wird andererseits ein Zusammenfallen des Zündmittels während des Anformens des Dichtelements vermieden.

Vorzugsweise ist das freie Ende des Stiftes abgerundet, so dass die Innenwand des aufgesteckten strangförmigen Zündmittels nicht beschädigt wird. Von Vorteil ist es ferner, wenn sich der Stift an seinem freien Ende verjüngt, so dass das Aufstecken des strangförmigen Zündmittels erleichtert wird.

Der Gießraum kann ferner so gestaltet sein, dass der Außenumfang des ringförmigen Querschnitts von der hinteren zur vorderen Wand konstant bleibt oder sich ändert. Damit kann, wie bereits oben dargelegt, das Dichtelement so ausgestaltet werden, dass es ein über seine Länge gleichbleibendes oder sich änderndes Querschnittsprofil aufweist.

Der Gießraum kann auch so gestaltet sein, dass der Außenumfang im Längsschnitt ein Wellenprofil aufweist, um ein wie bereits oben beschriebenes Dichtelement zu formen, dessen Längsschnitt ein Wellenprofil aufweist.

Zur Ausbildung eines Dichtelements, das einen Anschlag aufweist, welche Ausführungsform bereits oben beschrieben wurde, kann sich der Querschnitt des Gießraumes außenumfangsseitig für einen vorgegebenen Längenabschnitt von der vorderen Stirnwand aus gemessen flanschartig erweitern.

Die Formvorrichtung zur Anformung eines mantelartigen Dichtelements an ein strangförmiges Zündmittel kann ferner zerlegbar gestaltet sein, um die Entnahme des fertigen strangförmigen Zündmittels mit angeformtem Dichtelement zu erleichtern.

Die vorliegende Erfindung betrifft ferner ein Verfahren zur Anformung eines mantelartigen Dichtelements an einen Endabschnitt eines strangförmigen Zündmittels. Das erfinderische Verfahren umfasst die Schritte: Aufstecken eines Endabschnitts eines strangförmigen Zündmittels auf den Stift in der Einführöffnung des Gießraumes der vorstehend dargestellten Formvorrichtung; Schieben des Zündmittels bis zum Anschlag an der einen Stirnwand des Gießraumes; und Füllen des Gießraumes mit einem Formmaterial zur Anformung eines Dichtelements an das Zündmittel.

Schließlich umfasst die vorliegende Erfindung auch ein Sprengsystem, das aus einem wie oben beschriebenen strangförmigen Zündmittel zum nichtelektrischen Zünden einer Sprengkapsel und einer Sprengkapsel besteht. Die Sprengkapsel umfasst ein becherförmiges Gehäuse, einen an den Boden des Gehäuses angrenzenden Gehäuseabschnitt, der mit einer Sekundärladung gefüllt ist, einen daran angrenzenden Gehäuseabschnitt, der mit einer Primärladung gefüllt ist, und einen verbleibenden Gehäuseabschnitt zur form- und/oder kraftschlüssigen Aufnahme des strangförmigen Zündmittels mit angeformtem Dichtelement.

Durch Anpassung der Form (des Querschnittsprofils) des an das strangförmige Zündmittel angeformten Dichtelements an das Innenumfangsprofil des Aufnahmeabschnitts der Sprengkapsel wird eine form- und/oder kraftschlüssige Verbindung erreicht und kann ein Sprengsystem zur Verfügung gestellt werden, das eine einfache und dennoch feste und dichte Verbindung von Zündmittel und Sprengkapsel ermöglicht. Auch wird damit die korrekte Positionierung des Zündmittels in der Sprengkapsel sichergestellt, so dass nach Übertragen des Zündimpulses durch das strangförmige Zündmittel die Primärladung der Sprengkapsel gezündet wird, welche wiederum die Sekundärladung der Sprengkapsel zündet. Die Detonation der Sekundärladung wird dann die eigentliche Sprengladung zünden.

Das Dichtelement und der Aufnahmeabschnitt der Sprengkapsel sind sowohl hinsichtlich der Länge, d. h. der Tiefe bis zu der das Zündmittel in die Sprengkapsel eingeführt wird, als auch des Längs- und Querschnittsprofils aneinander angepasst.

So kann z. B. der Aufnahmeabschnitt der Sprengkapsel ringartige Ausnehmung aufweisen und kann demgemäß das an das Zündmittel angeformte Dichtelement entsprechende ringartige Vertiefungen oder Erhöhungen aufweisen, so dass ein Eingriff zwischen Sprengkapsel und eingeführtem Dichtelement stattfindet, wodurch sowohl ein fester Sitz des strangförmigen Zündmittels in der Sprengkapsel als auch eine wirksame Abdichtung gegen ein Eindringen von Feuchtigkeit sichergestellt sind.

Weitere Vorteile und Merkmale der vorliegenden Erfindung ergeben sich aufgrund der Beschreibung von Ausführungsbeispielen sowie anhand der Zeichnungen.

Es zeigt:
- Fig.1:: ein strangförmiges Zündmittel mit angeformtem mantelartigem Dichtelement gemäß einer Ausführungsform der vorliegenden Erfindung,
- Fig.2:: ein strangförmiges Zündmittel mit angeformtem mantelartigem Dichtelement gemäß einer weiteren Ausführungsform der vorliegenden Erfindung,
- Fig.3:: eine Formvorrichtung , mit der das strangförmiges Zündmittel aus Fig. 1 hergestellt werden kann, und
- Fig.4:: ein Sprengsystem bestehend aus dem strangförmigen Zündmittel aus Fig. 1 und einer Sprengkapsel.

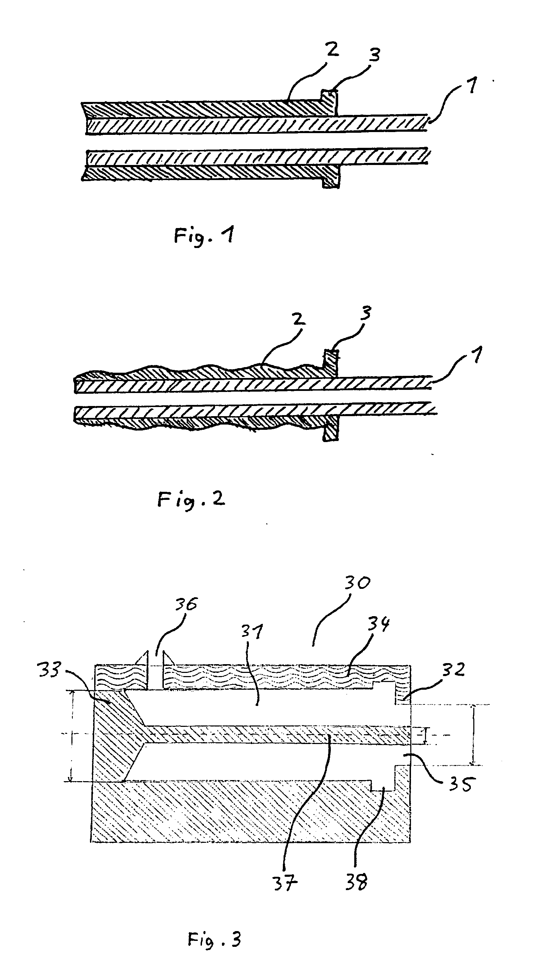

In Figur 1 ist ein strangförmiges Zündmittel gemäß einer Ausführungsform der vorliegenden Erfindung dargestellt. In dieser Ausführungsform ist das strangförmige Zündmittel ein Zündschlauch, der aus einer einlagigen Umhüllung 1 mit angeformtem Dichtelement 2 besteht. Das Dichtelement 2 ist im Besonderen so geformt, dass es in einem vorgegebenen Abstand von dem in die Sprengkapsel einzuführenden Ende des Zündschlauchs einen flanschartigen Anschlag 3 aufweist. In die Umhüllung 1 ist ein in Figur 1 nicht aufgezeigter Explosivstoff eingebracht.

In Figur 2 ist ein strangförmiges Zündmittel gemäß einer weiteren Ausführungsform der vorliegenden Erfindung dargestellt. Das Dichtelement 2 unterscheidet sich von dem in Fig. 1 gezeigten Dichtelement lediglich darin, dass es im Längsschnitt außenumfangsseitig ein Wellenprofil aufweist.

In Figur 3 ist eine in dem erfindungsgemäßen Verfahren verwendete Formvorrichtung 30 dargestellt. Der Gießraum 31 ist von einer vorderen Stirnwand 32, einer hinteren Stirnwand 33 und einer zylinderförmigen Seitenwand 34 begrenzt. In der vorderen Stirnwand 32 des Gießraumes 31 ist eine Einführöffnung 35 zum Einführen des strangförmigen Zündmittels, wie zum Beispiel eines Zündschlauchs, ausgebildet. Der Gießraum 31 weist ferner eine Einfüllöffnung 36 zum Einfüllen des Formmaterials auf, die in dem gezeigten Ausführungsbeispiel in der zylinderförmigen Seitenwand 34 ausgebildet ist.

Von der hinteren Stirnwand 33 aus erstreckt sich ein Stift 37 koaxial zum Gießraum 31 bis in die Einführöffnung 35 in der vorderen Stirnwand 32. Die Querschnittsform des Gießraumes 31 ist somit ringförmig. Der Innenumfang des Gießraumquerschnitts wird durch den Stift 37 begrenzt. Ferner ist der Außenumfang des ringförmigen Querschnitts des Gießraumes 31 in einem an der vorderen Stirnwand 32 angrenzenden Längenabschnitt 38 gegenüber dem restlichen Gießraum ringflanschartig verbreitert. Dadurch kann ein Dichtelement an dem Zündschlauch angeformt werden, das einen Anschlag aufweist. Ein Dichtelement mit entsprechendem Längsschnittprofil ist in Figur 1 dargestellt.

Die Formvorrichtung 30 ist in Fig. 3 lediglich schematisch dargestellt und kann natürlich entsprechend der üblichen Anforderungen für ein derartiges Gießverfahren über weitere dem Fachmann geläufige Ausstattungsmerkmale verfügen. So kann die Formvorrichtung 30 beispielsweise aus mehreren Einzelteilen aufgebaut sein, so dass sie nach dem Anformen des Dichtelements an das strangförmige Zündmittel zur leichteren Entnahme des fertigen Produkts zerlegt werden kann.

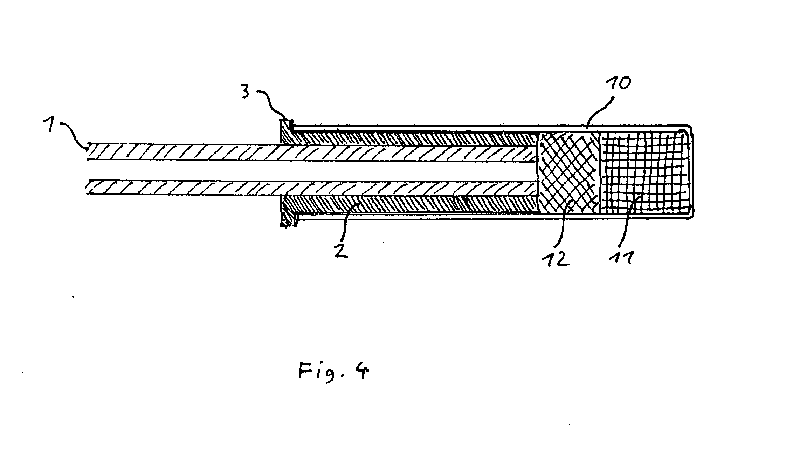

In Figur 4 ist ein Sprengsystem gemäß der vorliegenden Erfindung dargestellt. Es besteht aus dem in Figur 1 dargestellten Zündschlauch und einer Sprengkapsel. Die Sprengkapsel umfasst ein becherförmiges Gehäuse 10, eine Sekundärladung 11, die in einen an den Boden des Gehäuses angrenzenden Gehäuseabschnitt gefüllt ist, eine Primärladung 12, die in einen an die Sekundärladung angrenzenden Gehäuseabschnitt gefüllt ist, und einen verbleibenden Gehäuseabschnitt zur Aufnahme des Zündschlauchs mit angeformtem Dichtelement.

Das Zündschlauch mit angeformtem Dichtelement 2 ist dabei so weit in die Sprengkapsel eingeführt, dass der Anschlag 3 des Dichtelements 2 an das offene Ende des Bechers 10 der Sprengkapsel anstößt. Dadurch wir eine gute Abdichtung gegen das Eindringen von Feuchtigkeit sichergestellt. Da das an die Umhüllung 1 angeformte Dichtelement 2 in seiner Länge und dem Durchmesser an die Abmessungen der Aufnahmeöffnung der Sprengkapsel angepasst ist, wird durch das Einführen des Zündschlauchs bis zum Anschlag eine vorbestimmte Lage des Endes des Zündschlauchs zur Primärladung 12 sichergestellt. Somit wird eine einfache, schnelle und dennoch dichte und feste Verbindung eines Zündschlauchs mit einer Sprengkapsel zur Verfügung gestellt.

Der Aufbau der Sprengkapsel in Figur 4 wurde lediglich schematisch dargestellt, um das Zusammenwirken zwischen strangförmigem Zündmittel und Sprengkapsel zu veranschaulichen. Die Sprengkapsel kann natürlich auch einen anderen geeigneten, im Stand der Technik bekannten Aufbau aufweisen.

## Patentansprüche

1. Verfahren zur Anformung eines mantelartigen Dichtelements (2) an einen Endabschnitt eines strangförmigen Zündmittels, das eine rohrartige Umhüllung (1) und einen in die Umhüllung (1) eingebrachten Explosivstoff umfasst, unter Verwendung einer Formvorrichtung mit einem hohlzylindrischen Gießraum (31), der innenumfangsseitig von einem sich von einer Stirnwand (33) des Gießraumes (31) aus erstreckenden, axialen Stift (37) begrenzt ist und an der anderen Stirnwand (32) eine zum Stift (37) koaxiale Einführöffnung (35) zum Einführen eines strangförmigen Zündmittels und an einer anderen Stelle als der Einführöffnung (35) eine Einfüllöffnung (36) zum Einfüllen eines Formmaterials zur Ausbildung des Dichtelements (2) aufweist, wobei der Stift (37) sich von der einen Stirnwand (33) des Gießraumes (31) zumindest bis in die Einführöffnung (35) an der anderen Stirnwand (32) erstreckt, mit folgenden Schritten:
Aufstecken eines Endabschnitts des strangförmigen Zündmittels auf den Stift (37) in der Einführöffnung (35) des Gießraumes (31),
Schieben des Zündmittels bis zum Anschlag an der einen Stirnwand (33) des Gießraumes (31), und
Füllen des Gießraumes (31) mit einem Formmaterial zur Anformung des Dichtelements (2) an das Zündmittel.

2. Strangförmiges Zündmittel zum nichtelektrischen Zünden einer Sprengkapsel, erhältlich durch ein Verfahren gemäß Anspruch 1.

3. Strangförmiges Zündmittel nach Anspruch 2, **dadurch gekennzeichnet, dass** das Dichtelement (2) ein über seine Länge sich änderndes Querschnittsprofil aufweist.

4. Strangförmiges Zündmittel nach Anspruch 3, **dadurch gekennzeichnet, dass** der Querschnitt des Dichtelements (2) in einem vorgegebenen Abstand von der Stirnfläche des einen Endabschnitts des strangförmigen Zündmittels flanschartig verbreitert ist.

5. Strangförmiges Zündmittel nach Anspruch 3 oder 4, **dadurch gekennzeichnet, dass** das Dichtelement (2) im Längsschnitt ein Wellenprofil aufweist.

6. Strangförmiges Zündmittel nach einem der Ansprüche 2 bis 5, **dadurch gekennzeichnet, dass** die Umhüllung (1) einen mehrlagigen Aufbau aufweist.

7. Strangförmiges Zündmittel nach einem der Ansprüche 2 bis 6, **dadurch gekennzeichnet, dass** der in die Umhüllung (1) eingebrachte Explosivstoff aus mindestens einem von Oktogen und Hexogen ausgewählt ist.

8. Strangförmiges Zündmittel nach einem der Ansprüche 2 bis 7, **dadurch gekennzeichnet, dass** die Umhüllung (1) vollständig mit dem Explosivstoff gefüllt ist.

9. Strangförmiges Zündmittel nach einem der Ansprüche 2 bis 7, **dadurch gekennzeichnet, dass** die Innenoberfläche der Umhüllung (1) mit dem Explosivstoff beschichtet ist.

10. Strangförmiges Zündmittel nach einem der Ansprüche 2 bis 9, **dadurch gekennzeichnet, dass** dem Dichtelement (2) zur Identifikation ein oder mehrere seltene Elemente zugesetzt sind.

11. Sprengsystem bestehend aus einem strangförmigen Zündmittel zum nichtelektrischen Zünden einer Sprengkapsel gemäß einem der Ansprüche 2 bis 10 und einer Sprengkapsel,
wobei die Sprengkapsel ein becherförmiges Gehäuse (10), einen an den Boden des Gehäuses angrenzenden ersten Gehäuseabschnitt, der mit einer Sekundärladung (11) gefüllt ist, einen in axialer Richtung an den ersten Gehäuseabschnitt angrenzenden Gehäuseabschnitt, der mit einer Primärladung (12) gefüllt ist, und einen in axialer Richtung verbleibenden Gehäuseabschnitt zur form- und/oder kraftschlüssigen Aufnahme eines strangförmigen Zündmittels nach einem der Ansprüche 2 bis 10 aufweist.

## Claims

1. Method for moulding a sleeve-like sealing element (2) onto an end portion of a strand-shaped ignition means which comprises a tube-like case (1) and an explosive introduced into the case (1), using a moulding device having a hollow-cylindrical casting
chamber (31) which is bounded on the inner circumference side by an axial pin (37) extending from an end wall (33) of the casting chamber (31) and which has at the other end wall (32) an introduction opening (35), coaxial with the pin (37), for the introduction of a strand-shaped ignition means and, at a location other than the introduction opening (35), a feed opening (36) for the feeding of a moulding material for forming the sealing element (2), the pin (37) extending from one end wall (33) of the casting chamber (31) at least into the introduction opening (35) at the other end wall (32), which method comprises the following steps:
fitting an end portion of the strand-shaped ignition means onto the pin (37) in the introduction opening (35) of the casting chamber (31),
pushing the ignition means until it abuts the end wall (33) of the casting chamber (31), and
filling the casting chamber (31) with a moulding material for moulding the sealing element (2) onto the ignition means.

2. Strand-shaped ignition means for the non-electric ignition of a blasting cap, obtainable by a method according to claim 1.

3. Strand-shaped ignition means according to claim 2, **characterised in that** the sealing element (2) has a cross-sectional profile which changes over its length.

4. Strand-shaped ignition means according to claim 3, **characterised in that** the cross-section of the sealing element (2) is widened in the manner of a flange at a given distance from the end face of the end portion of the strand-shaped ignition means.

5. Strand-shaped ignition means according to claim 3 or 4, **characterised in that** the sealing element (2) has an undulating profile in longitudinal section.

6. Strand-shaped ignition means according to any one of claims 2 to 5, **characterised in that** the case (1) has a multi-layer structure.

7. Strand-shaped ignition means according to any one of claims 2 to 6, **characterised in that** the explosive introduced into the case (1) is selected from at least one of octogen and hexogen.

8. Strand-shaped ignition means according to any one of claims 2 to 7, **characterised in that** the case (1) is filled completely with the explosive.

9. Strand-shaped ignition means according to any one of claims 2 to 7, **characterised in that** the inside surface of the case (1) is coated with the explosive.

10. Strand-shaped ignition means according to any one of claims 2 to 9, **characterised in that** one or more rare earth elements are added to the sealing element (2) for identification purposes.

11. Blasting system consisting of a strand-shaped ignition means according to any one of claims 2 to 10 for the non-electric ignition of a blasting cap, and a blasting cap, wherein the blasting cap has a cup-shaped housing (10), a first housing portion that is adjacent to the bottom of the housing and is filled with a secondary charge (11), a housing portion that is adjacent to the first housing portion in the axial direction and is filled with a primary charge (12), and a remaining housing portion in the axial direction for receiving a strand-shaped ignition means according to any one of claims 2 to 10 in a form-fitting and/or friction-locked manner.

## Revendications

1. Procédé de formage d'un élément d'étanchéité (2) de type enveloppe sur une partie d'extrémité d'un moyen d'allumage en forme de tronçon, qui comprend une gaine (1) tubulaire et un explosif introduit dans la gaine (1), en utilisant un dispositif de moulage avec un espace de coulée (31) cylindrique creux qui est délimité du côté périphérique interne par une tige (37) axiale partant d'une paroi frontale (33) de l'espace de coulée (31) et présente au niveau de l'autre paroi frontale (32) une ouverture d'introduction (35) coaxiale à la tige (37) pour l'introduction d'un moyen d'allumage en forme de tronçon et à un autre endroit que l'ouverture d'introduction (35), une ouverture de remplissage (36) pour le remplissage d'un matériau de moulage pour la réalisation de l'élément d'étanchéité (2), dans lequel la tige (37) s'étend de l'une des parois frontales (33) de l'espace de coulée (31) au moins jusqu'à l'ouverture d'introduction (35) au niveau de l'autre paroi frontale (32), avec les étapes suivantes consistant à :
monter une partie d'extrémité du moyen d'allumage en forme de tronçon sur la tige (37) dans l'ouverture d'introduction (35) de l'espace de coulée (31),
pousser le moyen d'allumage jusqu'à la butée contre l'une des parois frontales (33) de l'espace de coulée (31), et
remplir l'espace de coulée (31) d'un matériau de moulage pour former l'élément d'étanchéité (2) sur le moyen d'allumage.

2. Moyen d'allumage en forme de tronçon pour l'allumage non électrique d'un détonateur obtenu par un procédé selon la revendication 1.

3. Moyen d'allumage en forme de tronçon selon la revendication 2, **caractérisé en ce que** l'élément d'étanchéité (2) présente un profil de coupe transversale variable sur sa longueur.

4. Moyen d'allumage en forme de tronçon selon la revendication 3, **caractérisé en ce que** la coupe transversale de l'élément d'étanchéité (2) s'élargit à la manière d'un collet à une distance prédéfinie depuis la surface frontale de l'une des parties d'extrémité du moyen d'allumage en forme de tronçon.

5. Moyen d'allumage en forme de tronçon selon la revendication 3 ou 4, **caractérisé en ce que** l'élément d'étanchéité (2) présente un profil ondulé en coupe longitudinale.

6. Moyen d'allumage en forme de tronçon selon l'une quelconque des revendications 2 à 5, **caractérisé en ce que** la gaine (1) présente une structure multicouche.

7. Moyen d'allumage en forme de tronçon selon l'une quelconque des revendications 2 à 6, **caractérisé en ce que** l'explosif introduit dans la gaine (1) est choisi parmi au moins un octogène et hexogène.

8. Moyen d'allumage en forme de tronçon selon l'une quelconque des revendications 2 à 7, **caractérisé en ce que** la gaine (1) est entièrement remplie d'explosif.

9. Moyen d'allumage en forme de tronçon selon l'une quelconque des revendications 2 à 7, **caractérisé en ce que** la surface interne de la gaine (1) est revêtue d'explosif.

10. Moyen d'allumage en forme de tronçon selon l'une quelconque des revendications 2 à 9, **caractérisé en ce qu'**un ou plusieurs éléments rares sont ajoutés à l'élément d'étanchéité (2) pour l'identification.

11. Système d'explosion composé d'un moyen d'allumage en forme de tronçon pour l'allumage non électrique d'un détonateur selon l'une quelconque des revendications 2 à 10 et d'un détonateur,
dans lequel le détonateur présente un boîtier (10) en forme de bécher, une première section de boîtier adjacente au fond du boîtier, qui est remplie d'une charge secondaire (11), une section de boîtier adjacente dans le sens axial à la première section de boîtier, qui est remplie d'une charge primaire (12) et une section de boîtier restante dans le sens axial pour la réception par correspondance de forme et/ou de force d'un moyen d'allumage en forme de tronçon selon l'une quelconque des revendications 2 à 10.
